# EUROPÄISCHE PATENTANMELDUNG

(11) **EP 2 590 230 A2**
(43) Veröffentlichungstag der Anmeldung: **08.05.2013**
(21) Anmeldenummer: 12190504.6
(22) Anmeldetag: 30.10.2012
(51) Int. Cl.: H01L 31/048

(54) **Photovoltaik-Freiflächenanlage**

(30) Priorität: 03.11.2011 DE 202011107554 U
(71) Anmelder: GLASWERKE ARNOLD GmbH & Co. KG, 73630 Remshalden (DE)
(72) Erfinder: Kirchner, Jochen, 18519 Sundhagen (DE)
(74) Vertreter: Dreiss

(57) **Zusammenfassung**

Die Erfindung betrifft eine Photovoltaik-Freiflächenanlage (20) für landwirtschaftlich genutzte oder zu nutzende Freiflächen (18), mit einem über einer Freifläche (18) aufgeständerten Paneel (21) aus einer Vielzahl benachbarter und miteinander elektrisch verschalteter Photovoltaik-Module (10); es wird vorgeschlagen, dass das Paneel (21) ganz- oder teilflächig mit semi- oder volltransparenten Photovoltaik-Modulen (10) bestückt ist, um die darunter liegende Freifläche (18) landwirtschaftlich nutzen zu können.

## Beschreibung

Die vorliegende Erfindung bezieht sich auf eine Photovoltaik-Freiflächenanlage nach dem Oberbegriff des Anspruchs 1.

Bei Photovoltaik-Freiflächenanlagen ist es üblich, mehrere Paneele nebeneinander in geneigter Weise zur Sonnenlichteinstrahlung ausgerichtet relativ nahe (von beispielsweise 1 m) über dem Erdboden anzuordnen. Dabei sind die Photovoltaik-Module opak und zur Erhöhung des Wirkungsgrades mit einer reflektierenden Rückschicht versehen, so dass das Sonnenlicht zum größten Teil absorbiert wird und auf Grund der reflektierenden Rückschicht im Übrigen nochmals durch die Siliziumschicht tritt. Derartige opake Photovoltaik-Module lassen praktisch kein Sonnenlicht zum Boden hin durch, was zu einer hohen Abschattung und einem bzgl. der Energieerzeugung günstigen Wirkungsgrad führt.

Nachteilig bei den bekannten Photovoltaik-Freiflächenanlagen ist, dass die sich unter der Anlage befindende Freifläche landwirtschaftlich nicht oder nur sehr eingeschränkt genutzt werden können, nicht nur deshalb, weil der lichte Abstand der Anlage zur Oberfläche der Freiflächen zu gering ist, sondern insbesondere auch deshalb, weil die Freiflächenanlage auf Grund der Opazität der Photovoltaik-Module eine Abschattung des Bodens bewirkt, die in den gemäßigten Klimazonen eine optimale landwirtschaftliche Nutzung verhindert. Bislang wurde unterhalb von Photovoltaik-Freiflächenanlagen keine landwirtschaftliche Nutzung betrieben.

Aufgabe der vorliegenden Erfindung ist es, die Nutzung von Photovoltaik-Freiflächenanlagen zu erweitern. Insbesondere wäre es wünschenswert, eine Photovoltaik-Freiflächenanlage der eingangs genannten Art zu schaffen, auf Grund deren Bauart und/oder Installation es auch möglich ist, die derart überdeckten Freiflächen landwirtschaftlich optimal zu nutzen beziehungsweise in subtropischen und tropischen Klimazonen erst landwirtschaftlich nutzbar zu machen.

Diese Aufgabe wird erfindungsgemäß durch eine Photovoltaik-Freiflächenanlage mit den Merkmalen des Anspruchs 1 gelöst.

Erfindungsgemäß wird also vorgeschlagen, die Photovoltaik-Module der Anlage semitransparent oder volltransparent auszubilden, wobei volltransparent bedeutet, dass die Photovoltaik-Module über ihre flächenhafte Erstreckung transparent ausgebildet sind, und wobei semitransparent bedeutet, dass die Photovoltaik-Module über ihre flächenhafte Erstreckung transparente und nicht transparente Strukturen aufweisen.

Aufgrund der relativ hohen Transparenz der verwendeten teil- oder semitransparenten beziehungsweise volltransparenten Photovoltaik-Module von etwa ≥ 10% ist es in gemäßigten Klimazonen möglich, die darunterliegende Freifläche landwirtschaftlich zu nutzen, da diese Freiflächen mit ausreichend Sonnenlicht versorgt beziehungsweise beschienen werden. Darüber hinaus ist es in den subtropischen und tropischen Klimazonen auf Grund des Verhältnisses von Sonnenlichtaussetzung und Abschattung der Freiflächen überhaupt erst möglich, diese Freiflächen landwirtschaftlich zu nutzen, da deren Boden auf Grund ausreichender Abschattung vor dem Austrocknen bewahrt wird.

In vorteilhafter Weise istgemäß einem Ausführungsbeispiel das Paneel ganz- oder teilflächig mit volltransparenten Photovoltaik-Modulen bestückt, und die Photovoltaik-Module besitzen einen in allen Schichten transparenten photoaktiven Schichtaufbau.

Bei einem Ausführungsbeispiel mit volltransparenten Photovoltaik-Modulen ist vorgesehen, dass der photoaktive Schichtaufbau mit aus vorzugsweise Silizium bestehenden Dünnschicht-Solarzellen versehen ist, auf denen lichteinfallseitig eine transparente, elektrisch leitende Oxid-Schicht (TCO) angeordnet ist und die rückseitig über eine strukturierte elektrisch leitende Schicht mit einem transparenten Substrat verbunden sind, und dass die rückseitig der Dünnschicht-Solarzellen angeordnete elektrisch leitende Schicht durch eine transparente Oxid-Schicht (TCO) gebildet ist.

Nach einer weiteren Ausführungsform der Erfindung ist das Paneel der Photovoltaik-Freiflächenanlage ganz- oder teilflächig mit semitransparenten Photovoltaik-Modulen bestückt, und der photoaktive Schichtaufbau der semitransparenten Photovoltaik-Module umfasst transparente Dünnschicht-Solarzellen und eine rückseitig der Dünnschicht-Solarzellen angeordnete elektrisch leitende Schicht aus einem lichtdichten, also nicht transparenten Material, und diese Schicht aus lichtdichtem Material ist durch strukturierten Materialabtrag, insbesondere mittels eines Lasers, semitransparent ausgebildet.

Bei einer weiteren Ausführungsform mit semitransparenten Photovoltaik-Modulen ist vorgesehen, dass das Paneel ganz- oder teilflächig mit semitransparenten Photovoltaik-Modulen bestückt ist und dass der photoaktive Schichtaufbau der semitransparenten Photovoltaik-Module Dünnschicht-Solarzellen umfasst, die in einem Abstand voneinander angeordnet sind, so dass Licht zwischen den Dünnschicht-Solarzellen hindurchtreten kann. In diesem Fall kann auf der lichtabgewandten Rückseite der Dünnschicht-Solarzellen auch ein lichtdichtes nicht transparentes elektrisch leitendes Material vorgesehen sein, solang der lichtdurchlässige Abstand zwischen den Dünnschicht-Solarzellen eine hinreichende Lichtdurchlässigkeit des Paneels von beispielsweise wenigstens 10 % der insgesamt einfallenden Strahlungsenergie hindurchlässt und sofern das lichtdichte Material in dem Zwischenraum zwischen den Dünnschicht-Solarzellen abgetragen ist.

Es können auch mikrokristalline oder semitransparente ASI-Dünnschichten oder kristalline Wafer vorgesehen sein.

Bei einer Lichttransmission im Bereich von etwa 10 % bis etwa 30 % ist einerseits eine ausreichende Lichttransmission für eine Nutzung der Freifläche vorgesehen und andererseits wird eine Abschattung erreicht, die ein Austrocknen des Bodens insbesondere in subtropischen oder tropischen Gebieten ermöglicht. Die Anforderungen an Transparenz, Energieerzeugung und Abschattung sind damit optimal.

Es erweist sich weiter als vorteilhaft, wenn das Paneel eine transparente Glasscheibe als Substrat für einen photoaktiven Schichtaufbau aufweist.

Es wird weiter vorgeschlagen, dass die Aufständerung des oder der Paneele eine Höhe über dem Boden der Freifläche aufweist, die eine landwirtschaftliche Nutzung, vorzugsweise auch mittels landwirtschaftlicher Maschinen, ermöglicht. Die Aufständerung des oder der Paneele weist vorteilhafterweise eine Mindesthöhe von wenigstens 1,5 m, insbesondere von wenigstens 2,0 m, insbesondere von wenigstens 2,5 m, insbesondere von wenigstens 3,0 m auf.

Die Erfindung betrifft desweiteren eine Verwendung nach Anspruch 10.

Weitere Einzelheiten der Erfindung sind der folgenden Beschreibung zu entnehmen, in der die Erfindung anhand des in der Zeichnung dargestellten Ausführungsbeispiels näher beschrieben und erläutert ist. Es zeigen:
- Figur 1: in schematischer Seitenansicht eine Photovoltaik-Freiflächenanlage gemäß einem Ausführungsbeispiel vorliegender Erfindung und
- Figur 2: einen Schnitt längs der Linie II-II der Figur 1.

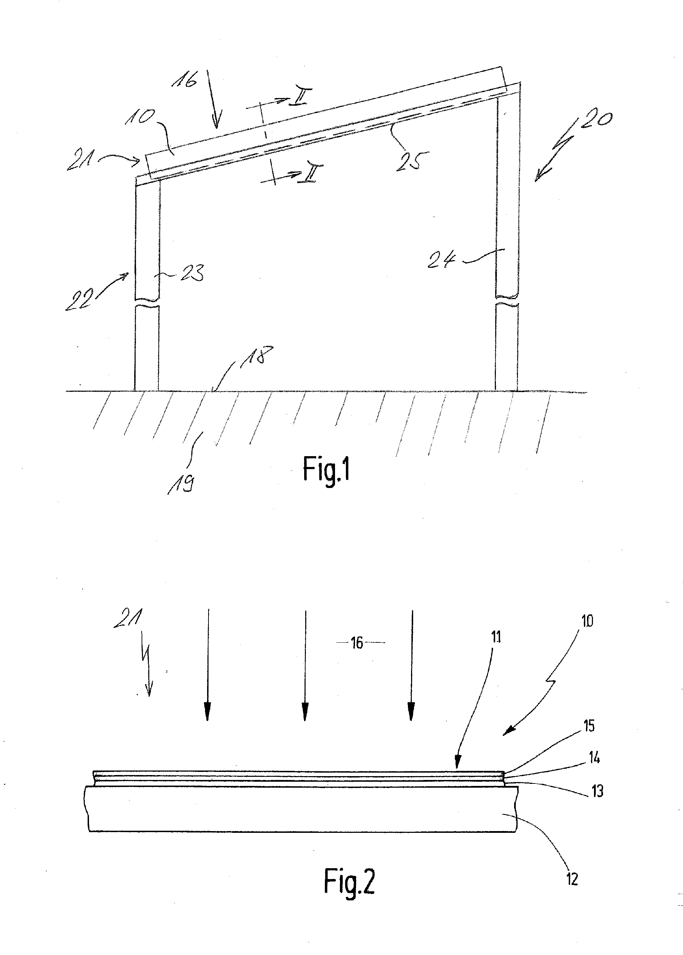

Figur 1 zeigt schematisch und beispielhaft eine Photovoltaik-Freiflächenanlage 20, die ein oder mehrere aufgeständerte Paneele 21 aufweist, von denen jedes Paneel 21 jeweils eine Vielzahl benachbarter Photovoltaik-Module, die miteinander elektrisch verschaltet sind, aufweist. Die Aufständerung 22 besteht in üblicher Weise aus unterschiedlich hohen aufrechtstehenden Pfosten 23 und 24, die beispielsweise eckseitig eines Paneels 21 angeordnet sind, und einem Rahmenteil 25, das auf Grund der unterschiedlichen Länge der Pfosten 23 und 24 in üblicher Weise zur Lichteinfallsseite 16 hin geneigt ist. Das Rahmenteil 25 kann im Schnitt bspw. L-förmigausgebildet sein. Das Paneel 21 kann randseitig an dem Rahmenteil 25 aufgenommen sein. Die Aufständerung 22 ist derart, dass das oder die Paneele 21 in einer Höhe über dem Freiflächen-Boden 19 angeordnet ist beziehungsweise sind, so dass landwirtschaftliche Nutzung nicht behindert wird, und insbesondere derart, dass diese Freifläche 18 auch mit Maschinen genutzt werden kann.

Das Paneel 21 besitzt statt bekannter opaker Module sogenannte semi- oder volltransparente Photovoltaik-Module 10, die definitionsgemäß eine Lichttransmission von mindestens etwa 10 % aufweisen sollten. Dieses Maß an Lichttransmission ermöglicht in den gemäßigten Klimazonen der nördlichen und südlichen Erdhalbkugel einen ausreichenden Sonnenlichteinfall auf den Boden 19 der Freifläche 18, und zwar ausreichend für eine optimale landwirtschaftliche Nutzung dieser Freifläche 18. Eine Lichttransmission von bspw. 10 % bis 30 % bedeutet umgekehrt eine Abschattung von 70 % bis 90 % der Freifläche 18, die für subtropische und tropische Klimazonen wesentlich ist, um ein Austrocknen des Bodens 19 zu verhindern, so dass der Boden 19 solcher Freiflächen 18, die auf Grund von Austrocknung bisher nicht genutzt werden können, nunmehr nutzbar gemacht werden kann.

Figur 2 zeigt ein Ausführungsbeispiel eines volltransparenten Photovoltaik-Moduls 10, und zwar hier bei einer sogenannten Kaltverglasung, also einer Einscheiben- oder Verbundverglasung. Das Photovoltaik-Modul 10 besitzt einen auf einem transparenten Substrat 12, vorzugsweise in Form der genannten Glasscheibe, angeordneten photoaktiven Schichtaufbau 11. Dieser in diesem Ausführungsbeispiel volltransparente Schichtaufbau 11 besteht beim Ausführungsbeispiel aus drei im Wesentlichen transparenten Schichten 13 bis 15, nämlich einer auf das Substrat 12 aus Glas aufgebrachten TCO-Schicht (Transparent Conductive Oxide), also einer transparenten elektrisch leitenden Oxidschicht 13, einer Photovoltaik-Dünnschicht 14, vorzugsweise aus beispielsweise amorphem oder mikrokristallinem Silizium, die zur Bildung von Solarzellen in einzelne Zellen aufgeteilt ist, sowie einer der Lichteinfallseite 16 zugewandten weiteren TCO-Schicht 15, die ebenfalls eine transparente elektrisch leitende Oxidschicht darstellt. Beide TCO-Schichten 13 und 15 sind strukturiert, um die einzelnen nicht dargestellten Solarzellen der Silizium-Dünnschicht 14 entsprechend elektrisch miteinander zu verbinden. Als TCO-Schicht kommen beispielsweise Zinnoxid- oder Zinkoxid-Schichten in Frage.

Das Entscheidende bei der Rückseitenkontaktierung (= TCO-Schicht) ist, dass diese nicht "lichtdicht" ist, so dass durch sie Licht hindurch auf die Vegetation fallen kann.

Ist diese Voraussetzung erfüllt, kann die Rückseitenkontaktierung mit beliebigen Materialien ausgeführt werden. - Im Falle der Verwendung eines blickdichten Materials zur Herstellung der Rückseitenkontaktierung muss es mit dem Laser zusätzlich strukturiert werden (=Materialabtragung), es wird also bereichsweise wieder entfernt, beispielsweise in einer linienförmigen Struktur, so dass mittels dieser transparenten Linien eine Semitransparenz entsteht. - Im Falle der Verwendung von kristallinen Wafern muss eine Lichtdurchdringung zwischen den Zellen möglich sein. Die Zellen werden also in einem Abstand voneinander angeordnet, so dass durch diesen Abstand zwischen den Zellen Licht hindurchtreten kann. Das bedeutet, dass der rückseitige Modulabschluss zumindest dort zwischen den Zellen transparent ausgeführt sein muss (transparentes Glas oder transparente Folie). Auf diese Weise ergibt sich ein mit ausschließlich teil- oder semitransparenten, also bereichsweise transparenten Schichten versehener teiltransparenter photoaktiver Schichtaufbau 11, der eine entsprechende, angepasste Lichttransmission aufweist, die einerseits ausreicht, um der darunter liegenden Vegetation genügend Licht zu spenden, andererseits auch, um für die notwendige Verschattung zu sorgen.

Es versteht sich, dass bei der erfindungsgemäßen Photovoltaik-Freiflächenanlage 20 auch voll- oder teiltransparente Photovoltaik-Module 10 anderer konstruktiver Ausgestaltungen (bspw. mit beliebiger Rückseitenkontaktierung oder auch als semitransparente kristalline Module) zum Einsatz kommen können. Wesentlich ist ein ausgewogenes Verhältnis zwischen Lichttransmission und Abschattungswirkung derartiger Photovoltaik-Module 10, die darüber hinaus einen akzeptablen Wirkungsgrad für die Umwandlung von Sonnenlicht in elektrische Energie besitzen.

## Patentansprüche

1. Photovoltaik-Freiflächenanlage (20) für landwirtschaftlich genutzte oder zu nutzende Freiflächen (18), mit einem über einer Freifläche (18) aufgeständerten Paneel (21) aus einer Vielzahl benachbarter und miteinander elektrisch verschalteter Photovoltaik-Module (10), **dadurch gekennzeichnet, dass** das Paneel (21) ganz- oder teilflächig mit semi- oder volltransparenten Photovoltaik-Modulen (10) bestückt ist.

2. Photovoltaik-Freiflächenanlage nach Anspruch 1,
**dadurch gekennzeichnet, dass** das Paneel (21) ganz- oder teilflächig mit volltransparenten Photovoltaik-Modulen (10) bestückt ist und dass die Photovoltaik-Module (10) einen in allen Schichten transparenten photoaktiven Schichtaufbau (11) besitzen.

3. Photovoltaik-Freiflächenanlage nach Anspruch 2,
**dadurch gekennzeichnet, dass** der photoaktive Schichtaufbau (11) mit aus vorzugsweise Silizium bestehenden Dünnschicht-Solarzellen (14) versehen ist, auf denen lichteinfallseitig eine transparente, elektrisch leitende Oxid-Schicht (TCO) (15) angeordnet ist und die rückseitig über eine strukturierte elektrisch leitende Schicht (13) mit einem transparenten Substrat (12) verbunden sind, und dass die rückseitig der Dünnschicht-Solarzellen (14) angeordnete elektrisch leitende Schicht (13) durch eine transparente Oxid-Schicht (TCO) (13) gebildet ist.

4. Photovoltaik-Freiflächenanlage nach Anspruch 1,
**dadurch gekennzeichnet, dass** das Paneel (21) ganz- oder teilflächig mit semitransparenten Photovoltaik-Modulen (10) bestückt ist und dass der photoaktive Schichtaufbau (11) der semitransparenten Photovoltaik-Module (10) transparente Dünnschicht-Solarzellen und eine rückseitig der Dünnschicht-Solarzellen angeordnete elektrisch leitende Schicht aus einem lichtdichten, also nicht transparenten Material umfasst und dass diese Schicht aus lichtdichtem Material durch strukturierten Materialabtrag, insbesondere mittels eines Lasers, semitransparent ausgebildet ist.

5. Photovoltaik-Freiflächenanlage nach Anspruch 1,
**dadurch gekennzeichnet, dass** das Paneel (21) ganz- oder teilflächig mit semitransparenten Photovoltaik-Modulen (10) bestückt ist und dass der photoaktive Schichtaufbau der semitransparenten Photovoltaik-Module (10) Dünnschicht-Solarzellen umfasst, die in einem Abstand voneinander angeordnet sind, so dass Licht zwischen den Dünnschicht-Solarzellen hindurchtreten kann.

6. Photovoltaik-Freiflächenanlage nach mindestens einem der vorhergehenden Ansprüche, **dadurch gekennzeichnet, dass** das Photovoltaik-Modul (10) eine Lichttransmission im Bereich von etwa 10 % bis etwa 30 % aufweist.

7. Photovoltaik-Freiflächenanlage nach mindestens einem der vorhergehenden Ansprüche, **dadurch gekennzeichnet, dass** das Paneel (21) eine Glasscheibe als Substrat (12) für einen photoaktiven Schichtaufbau (11) aufweist.

8. Photovoltaik-Freiflächenanlage nach mindestens einem der vorhergehenden Ansprüche, **dadurch gekennzeichnet, dass** die Aufständerung (22) des oder der Paneele (21) eine Höhe über dem Boden (19) der Freifläche (18) derart aufweist, dass eine landwirtschaftliche Nutzung darunter, auch mittels landwirtschaftlicher Maschinen, möglich ist.

9. Photovoltaik-Freiflächenanlage nach mindestens einem der vorhergehenden Ansprüche, **dadurch gekennzeichnet, dass** die Aufständerung (22) des oder der Paneele (21) eine Mindesthöhe von wenigstens 1,5 m, insbesondere von wenigstens 2,0 m, insbesondere von wenigstens 2,5 m, insbesondere von wenigstens 3,0 m über dem Boden (19) der Freifläche (18) aufweist.

10. Verwendung einer Photovoltaik-Freiflächenanlage (20) nach einem oder mehreren der vorstehenden Ansprüche auf landwirtschaftlich genutzten oder zu nutzenden Freiflächen (18) unter landwirtschaftlicher Nutzung der Freifläche (18) unterhalb der Photovoltaik-Freiflächenanlage (20).
